# EUROPEAN PATENT APPLICATION

(11) **EP 3 338 732 A1**
(43) Date of publication of application: **27.06.2018**
(21) Application number: 16832371.5
(22) Date of filing: 29.07.2016
(51) Int. Cl.: A61C 8/00

(54) **IMPROVED DAMPING DEVICE FOR OVERDENTURES AND PROSTHESES ON DENTAL IMPLANTS**

(30) Priority: 31.07.2015 ES 201530899 U
(71) Applicant: Institut Catala D'especialitats Odontologiques, S.L., 17310 Girona (ES)
(72) Inventor: OLLER PARDOS, Victor, 17310 Lloret de Mar (Girona) (ES); TORRES POLO, Francisco Javier, 17310 Lloret de Mar (Girona) (ES)
(74) Representative: Isern Patentes y Marcas S.L.
(86) International application number: PCT/ES2016/070578
(87) International publication number: WO 2017/021578

(57) **Abstract**

The invention relates to an improved damping device for overdentures and prostheses on dental implants, designed to be positioned on dental implants and to bear on same, comprising an elongate body with elastic properties and with a structure in the form of leaf spring, each end of the body being designed to be positioned on dental implants and to bear on same.

## Description

### OBJECT OF THE INVENTION

The object of the present invention application is registering an improved damping device for overdentures and prostheses on dental implants, which incorporates significant innovations and advantages over the techniques used so far.

More specifically, the invention proposes the development of an improved damping device for overdentures and prostheses on dental implants which, as a result of its particular layout, makes it possible to provide considerable advantages in prosthetic systems for shaping overdentures and prostheses on implants.

### BACKGROUND OF THE INVENTION

In the current state of the art, existing prosthetic systems for shaping overdentures and prostheses on implants are based on the construction of structures anchored to the dental implants and made up of solid bars joined to the implant anchorages.

The materials used to this end are usually metallic, given their physical characteristics, essential for obtaining optimum levels of traction, flexion and compression for the prostheses.

The structures applied can vary depending on the implant system used, the anchorages being the variable component within the manufactured structure.

The bars can also be totally compact, hollow or "U" shaped in order to fit in place by physically joining them to the prosthesis on implants.

The present invention contributes to solving and overcoming the present problem, since it offers important advantages in prosthetic systems for shaping overdentures and prostheses on implants, with regard to known state of the art and materials being used.

### DESCRIPTION OF THE INVENTION

The present invention was developed to provide an improved damping device for overdentures and prostheses on dental implants, designed to be positioned on dental implants and to bear on same, essentially characterized in that it comprises an elongate body with elastic properties and with a structure in the form of leaf spring, each end of the body being designed to be positioned on dental implants and to bear on same.

Preferably, in the improved damping device for overdentures and prostheses on dental implants, the body is made of a polyether-ether-ketone material.

Additionally, in the improved damping device for overdentures and prostheses on dental implants, the body comprises a plurality of superimposed elastic strips.

Thanks to the present invention, it is possible to offer important advantages in prosthetic systems for shaping overdentures and prostheses on implants, with regard to known state of the art and current materials.

Other characteristics and advantages of the improved damping device for overdentures and prostheses on dental implants will become clear in light of the description of a preferred, though non-exclusive, embodiment, which, by way of a non-limiting example, is illustrated in the accompanying drawings, wherein:

### BRIEF DESCRIPTION OF THE DRAWINGS

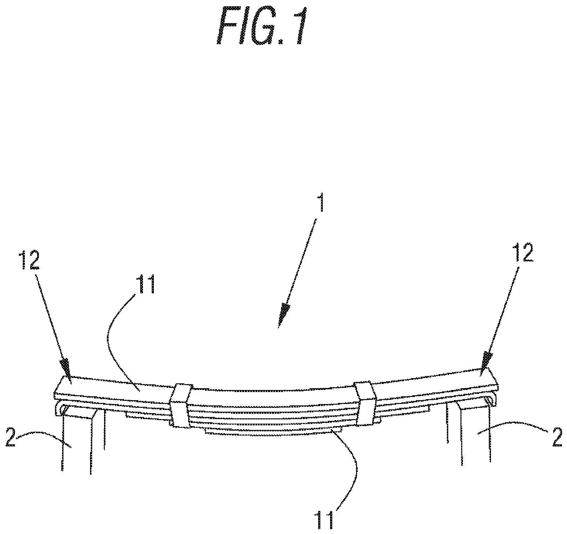

Figure 1 is a schematic view of a preferred embodiment of the improved damping device for overdentures and prostheses on dental implants of the present invention.

### DESCRIPTION OF A PREFERRED EMBODIMENT

The improved damping device for overdentures and prostheses on dental implants of the present invention lies within the technical field of prosthetic systems for shaping overdentures and prostheses on implants, and designed to be positioned on dental implants and to bear on same.

As can be seen in the schematic view shown in Figure 1, the improved damping device for overdentures and prostheses on dental implants of the present invention comprises and elongate body 1. Said elongate body 1 has a structure in the form of leaf spring.

According to its structure in the form of leaf spring, the body 1 comprises various superimposed elastic strips 11.

As can be seen in Figure 1, each end 12 of the body 1 is designed to be positioned on dental implants 2, previously arranged for this purpose.

In this preferred embodiment of the improved damping device for overdentures and prostheses on dental implants of the present invention, the body 1 is made of a polyether-ether-ketone material, also known as PEEK.

The proposed invention adequately combines the optimal specifications and requirements for the manufacturing of prostheses and overdentures for dental implants.

In addition, the ductility, flexibility and biocompatibility of the polyether-ether-ketone material, as well as the ergonomic design thereof, facilitate the positioning of the prostheses as well as the active cushioning thereof by exerting less pressure and offering a greater sensation of comfort and less discomfort for the patient.

The structure in the form of leaf spring of the proposed invention and the use of the polyether-ether-ketone material imply a geometry and also a material that confer greater flexibility to the metal bars and a similar Young module, such that they offer the same or better mechanical characteristics at a lower cost and greater maneuverability for the dental technician when manufacturing the overdentures or the prostheses on implants.

The proposed invention makes it possible to offer a range of lengths, widths and heads, variable and adapted to the instruments and types of prostheses on implants and overdentures.

Thus, the improved damping device for overdentures and prostheses on dental implants of the present invention obtains advanced advantages on the bars, frames and materials previously used in the state of the art in prostheses on implants and overdentures, such as for example:
- Improved stability with respect to the metallic bars.
- Improved anchorage of the prosthesis.
- Proven biocompatibility of the PEEK material.
- Easier placement/positioning of the prosthesis/overdenture.
- Optimized prosthetic treatment time.
- 3D printing systems can even be used to manufacture the components.
- Lower weight than metallic systems.
- Allergies to metallic materials disappear.
- Carrying out dental prosthesis repair with resins in clinics.
- Zero corrosion level in the components.

As a result of the foregoing description, the improved damping device for overdentures and prostheses on dental implants of the inventions offers important advantages with regard to known state of the art and current materials.

The details, shapes, dimensions and other accessory elements, as well as the materials used to manufacture the improved damping device for overdentures and prostheses on dental implants of the invention, may be suitably substituted for others which are technically equivalent, and do not diverge from the essential nature of the invention, nor the scope defined by the claims included below.

## Claims

1. An improved damping device for overdentures and prostheses on dental implants, designed to be positioned on dental implants (2) and to bear on same, **characterized in that** it comprises an elongate body (1) with elastic properties and with a structure in the form of leaf spring, each end (12) of the body (1) being designed to be positioned on dental implants (2) and to bear on same.

2. The improved damping device for overdentures and prostheses on dental implants according to claim 1, **characterized in that** the body (1) is made of a polyether-ether-ketone material.

3. The improved damping device for overdentures and prostheses on dental implants according to claim 1, **characterized in that** the body (1) comprises a plurality of superimposed elastic strips (11).
